# EUROPÄISCHE PATENTANMELDUNG

(11) **EP 1 087 642 A2**
(43) Veröffentlichungstag der Anmeldung: **28.03.2001**
(21) Anmeldenummer: 00120491.6
(22) Anmeldetag: 20.09.2000
(51) Int. Cl.: H05B 33/08, B60Q 1/00

(54) **Verfahren zur Ansteuerung von Leuchtmitteln von Fahrzeugen, vorzugsweise von Kraftfahrzeugen, sowie Vorrichtung zur Durchführung des Verfahrens**

(30) Priorität: 23.09.1999 DE 19945546
(71) Anmelder: REITTER & SCHEFENACKER GmbH & Co. KG, D-73730 Esslingen (DE)
(72) Erfinder: Diez, Werner, 72649 Wolfschlugen (DE); Weber, Christine, 73728 Esslingen (DE)
(74) Vertreter: Jackisch-Kohl, Anna-Katharina

(57) **Zusammenfassung**

Es ist bei Heckleuchten von Fahrzeugen bekannt, den Leuchtmitteln unterschiedliche Signalfunktionen zuzuordnen. Die hierfür vorgesehenen Leuchtmittel werden durch LEDs gebildet, die gering bestromt werden. Die LEDs weisen starke Toleranzen in der Vorwärtsspannung auf, so daß die LEDs unterschiedlich hell leuchten, je nach Fertigungstoleranz. Um das Verfahren und die Vorrichtung so auszubilden, daß die Helligkeit der Leuchtmittel gezielt eingestellt werden kann, werden die Leuchtmittel mit Nennstrom getaktet und ihre Helligkeit durch ein pulsweitenmodiliertes Signal eingestellt. Bei der Vorrichtung sind die Betätigungselemente an einen Mikroprozessor (4) angeschlossen, der die Signale der Betätigungselemente in pulsweitenmodulierte Signale wandelt, die an Ausgängen (12...n) des Mikroprozessor anliegen und über Treiberstufen (24...n) den Leuchtmitteln zugeführt werden. Das Verfahren dient beispielsweise zur Ansteuerung von Leuchtmitteln von Fahrzeugen in Heckleuchten oder im Innenraum.

## Beschreibung

Die Erfindung betrifft ein Verfahren zur Ansteuerung von Leuchtmitteln von Fahrzeugen, vorzugsweise von Kraftfahrzeugen, nach dem Oberbegriff des Anspruches 1 sowie eine Vorrichtung zur Durchführung eines solchen Verfahrens nach dem Oberbegriff des Anspruches 5.

Es ist bei Heckleuchten von Kraftfahrzeugen bekannt, den Leuchtmitteln unterschiedliche Signalfunktionen zuzuordnen. Die Heckleuchten weisen in der Regel ein Schlußlicht, ein Bremslicht, ein Nebelschlußlicht und ein Rückfahrlicht auf. Es ist bekannt, die hierfür vorgesehenen Leuchtmittel durch LEDs zu bilden, die gering bestromt werden, beispielsweise 20 % vom Nennstrom und kleiner. In diesem Bereich weisen die LEDs starke Toleranzen in der Vorwärtsspannung auf. Dies führt dazu, daß die LEDs unterschiedlich hell leuchten, je nach Fertigungstoleranzen.

Der Erfindung liegt die Aufgabe zugrunde, das gattungsgemäße Verfahren und die gattungsgemäße Vorrichtung so auszubilden, daß die Helligkeit der Leuchtmittel gezielt eingestellt werden kann.

Diese Aufgabe wird beim gattungsgemäßen Verfahren erfindungsgemäß mit den kennzeichnenden Merkmalen des Anspruches 1 und bei der gattungsgemäßen Vorrichtung erfindungsgemäß mit den kennzeichnenden Merkmalen des Anspruches 5 gelöst.

Die Leuchtmittel werden mit Nennstrom getaktet und ihre Helligkeit durch Pulsweitenmodulation entsprechend den gesetzlichen Anforderungen eingestellt. Die Leuchtmittel sind vorteilhaft LEDs, können aber auch Glühlampen sein. Die pulsweitenmodulierten Signale werden im Mikroprozessor erzeugt und über die Treiberstufen den jeweiligen Leuchtmitteln zugeführt. Die Helligkeitsänderung erfolgt durch das pulsweitenmodulierte Signal, das im Mikroprozessor mit einem entsprechenden Programm erzeugt wird. Sind die Leuchtmittel LEDs, können sie bei geringer Bestromung zuverlässig so gesteuert werden, daß sie entsprechend der jeweiligen Signalfunktion die gesetzlich vorgeschriebene Helligkeit aufweisen.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: eine Schaltung einer erfindungsgemäßen Vorrichtung zur Steuerung von Leuchtmitteln,
- Fig. 2: die Schaltung gemäß Fig. 1 in allgemeiner Form,
- Fig. 3: das Eingabesignal für verschiedene Leuchten in Abhängigkeit von der Zeit,
- Fig. 4: der Strom für verschiedene Leuchtmittel in Abhängigkeit von der Zeit,
- Fig. 5: in einem Diagramm Beispiele für Kombinationsmöglichkeiten verschiedener Signalfunktionen einer Heckleuchte eines Kraftfahrzeuges.

Die Schaltung dient zur Ansteuerung verschiedener Signalfunktionen einer Heckleuchte eines Kraftfahrzeuges. Die Schaltung kann auch zur Ansteuerung von Leuchtmitteln im Innenraum des Fahrzeuges herangezogen werden, beispielsweise für Armaturenbeleuchtung, Leselampen und dergleichen. Wesentlich ist, daß die Signalfunktionen mit unterschiedlichen Helligkeitsstufen angesteuert werden.

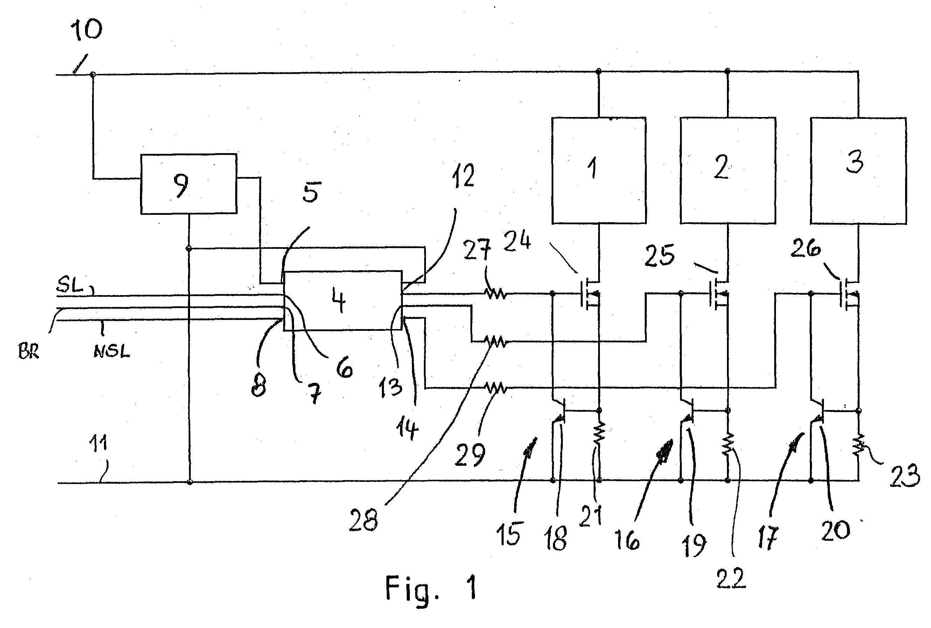

Mit der Schaltung gemäß Fig. 1 werden drei Leuchtmittel 1 bis 3 angesteuert. Diese Leuchtmittel werden im einfachsten Fall durch jeweils eine Glühlampe gebildet. Vorteilhaft sind die Leuchtmittel 1 bis 3 Leuchtfelder, die jeweils durch LEDs gebildet werden. Das Leuchtmittel 1 kann beispielsweise ein Schlußlicht, das Leuchtmittel 2 ein Bremslicht und das Leuchtmittel 3 ein Nebelschlußlicht einer Heckleuchte eines Kraftfahrzeuges sein. Ein Mikroprozessor 4 steuert die Helligkeit der Leuchtmittel 1 bis 3 mit einem entsprechenden Programm in Abhängigkeit der Eingangssignale 5 bis 8. Der Mikroprozessor 4 ist mit einem ROM-Speicher und einem entsprechenden Programm ausgestattet. Dem Mikroprozessor 4 vorgeschaltet ist ein Spannungsregler 9, der die Batteriespannung 10 von beispielsweise 12 Volt auf 5 Volt herunterregelt. Der Spannungsregler 9 liegt an Masse 11 an. Der Spannungsregler 9 gibt das Eingangssignal 5 an den Mikroprozessor 4. Die analogen Eingangssignale 6 bis 8 für die Leuchtmittel 1 bis 3 werden vom Mikroprozessor 4 entsprechend dem im ROM-Speicher abgelegten Programm bearbeitet und stehen am Ausgang 12 bis 14 des Mikroprozessors 4 an.

Dem Mikroprozessor 4 nachgeschaltet sind Strombegrenzerstufen 15 bis 17, die den zu den Leuchtmitteln 1 bis 3 fließenden Strom begrenzen, vorzugsweise auf eine konstante Stromstärke. Die Strombegrenzerstufen 15 bis 17 sind gleich ausgebildet und haben jeweils einen Transistor 18 bis 20 sowie einen parallel zu ihnen liegenden Widerstand 21 bis 23.

Zur Ansteuerung jedes Leuchtmittels 1 bis 3 ist jeweils eine Treiberstufe 24 bis 26 vorgesehen, die jeweils wenigstens einen elektronischen Schalter, vorzugsweise ein MOSFET, aufweisen. Das an den Ausgängen 12 bis 14 des Mikroprozessors 4 jeweils anstehende Ausgangssignal Wird über jeweils einen Widerstand 27 bis 29 der entsprechenden Treiberstufe 24 bis 26 zugeführt.

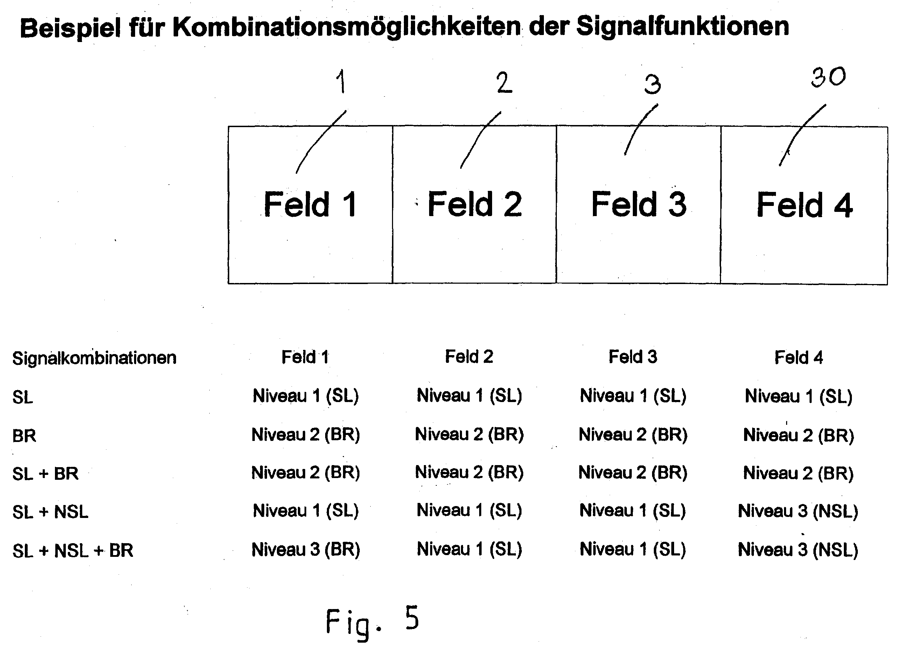

Die Leuchtmittel 1 bis 3 werden vorteilhaft durch LED-Felder gebildet. Diese LED- bzw. Signalfelder müssen im Hinblick auf ihre jeweilige Funktion bestimmten gesetzlichen Anforderungen bezüglich Lichtstärke, Flächendimension und Abstand der einzelnen Funktionsfelder voneinander genügen. Je nach der geforderten Signalkombination entstehen unterschiedliche Ausleuchtvarianten. Auch können die Signalfelder 1 bis 3 mit mehreren Signalfunktionen belegt werden. Dadurch müssen die Signalfelder 1 bis 3 in Abhängigkeit von der geforderten Signalkombination unterschiedliche Helligkeitsstufen aufweisen. In Fig. 5 sind beispielhaft Kombinationsmöglichkeiten für vier Signalfelder 1 bis 3 und 30 angegeben. Diese Signalfelder werden durch LED-Felder gebildet und sind in der Heckleuchte eines Kraftfahrzeuges vorgesehen. Die Signalfelder 1 bis 3, 30 können, wie in Fig. 5 schematisch dargestellt ist, unmittelbar aneinander schließen, so daß an der Heckleuchte die einzelnen Signalfelder bei nicht eingeschalteter Heckleuchte nicht als unterschiedliche Felder erscheinen. Im Beispielsfall ist angenommen, daß die Heckleuchte an Funktionen ein Schlußlicht SL, ein Bremslicht BR und ein Nebelschlußlicht NSL aufweisen soll.

Hat der Fahrer die Beleuchtung des Kraftfahrzeuges eingeschaltet, leuchtet an der Heckleuchte das Schlußlicht SL. Im Ausführungsbeispiel gemäß Fig. 5 werden dann alle vier Signalfelder 1 bis 3, 30 mit gleicher Helligkeit beleuchtet. In diesem Falle reicht eine geringe Helligkeit der einzelnen Signalfelder 1 bis 3, 30 aus. Dementsprechend werden die LEDs dieser Signalfelder auf dem Niveau 1 gehalten.

Hat der Fahrer die Beleuchtung des Kraftfahrzeuges nicht eingeschaltet und betätigt er die Bremse, leuchtet an der Heckleuchte die Bremsleuchte BR auf. Im Ausführungsbeispiel gemäß Fig. 5 werden in diesem Fall ebenfalls alle vier Signalfelder 1 bis 3, 30 bestromt, so daß sie gleichzeitig aufleuchten. Da für das Bremslicht BR vorgeschrieben ist, daß es mit einer Mindesthelligkeit strahlt, ist im Ausführungsbeispiel angenommen, daß die Helligkeit der Signalfelder 1 bis 3, 30 das Niveau 2 hat.

Fig. 5 zeigt den weiteren Fall, daß die Heckleuchte des Kraftfahrzeuges eingeschaltet ist und dabei die Bremse betätigt wird. Wird die Bremse nicht betätigt, leuchten die Signalfelder 1 bis 3, 30 mit dem Niveau 1. Sobald zusätzlich das Bremspedal gedrückt wird, wird die Helligkeit der Felder 1 bis 3, 30 auf das Niveau 2 angehoben, d.h. die Leuchtstärke wird erhöht, so daß die in bezug auf das Bremslicht vorgeschriebenen Helligkeitswerte erzeugt werden.

Wird bei eingeschalteter Heckleuchte vom Fahrer auch die Nebelschlußleuchte eingeschaltet, dann wird im Beispielsfall das Signalfeld 30 in seiner Helligkeit sehr stark auf das Niveau 3 erhöht. Dem Signalfeld 30 kommt somit die Funktion der Nebelschlußleuchte zu. Die Signalfelder 1 bis 3 bleiben hinsichtlich der Helligkeit auf dem Niveau 1, so daß diese drei Signalfelder die Funktion des Schlußlichtes erfüllen.

Schließlich ist in Fig. 5 der Fall angegeben, daß das Schlußlicht SL und das Nebelschlußlicht NSL eingeschaltet sind und das Bremspedal betätigt wird, so daß auch das Bremslicht BR aufleuchtet. In diesem Falle wird die Helligkeit des Signalfeldes 1 auf das Niveau 3 erhöht, so daß dieses Signalfeld 1 die Funktion des Bremslichtes erfüllt. Die Helligkeit der Signalfelder 2 und 3 bleibt auf dem Niveau 1, so daß diese Signalfelder die Funktion des Schlußlichtes SL haben. Das Signalfeld 30 dient als Nebelschlußleuchte NSL und hat dementsprechend die hohe Helligkeit mit dem Niveau 3.

Diese Beispiele belegen, daß durch unterschiedliche Helligkeiten der Signalfelder 1 bis 3, 30 die einzelnen Signalfunktionen der Heckleuchte des Kraftfahrzeuges entsprechend den gesetzlichen Forderungen einwandfrei erfüllt werden können.

Die Helligkeitsänderungen erfolgen durch ein pulsweitenmoduliertes Signal, das durch das im Mikroprozessor 4 abgelegte Programm erzeugt wird. Damit Bordspannungsschwankungen keinen Einfluß auf die maximale Stromhöhe im Strompfad zu den Leuchtfeldern 1 bis 3, 30 haben, wird der Strom in diesem Pfad mittels der beschriebenen Strombegrenzerstufen 15 bis 17 begrenzt. Die LEDs der Signalfelder 1 bis 3, 30 werden mit Nennstrom getaktet, während die Helligkeit durch das Pulspausenverhältnis gesteuert wird.

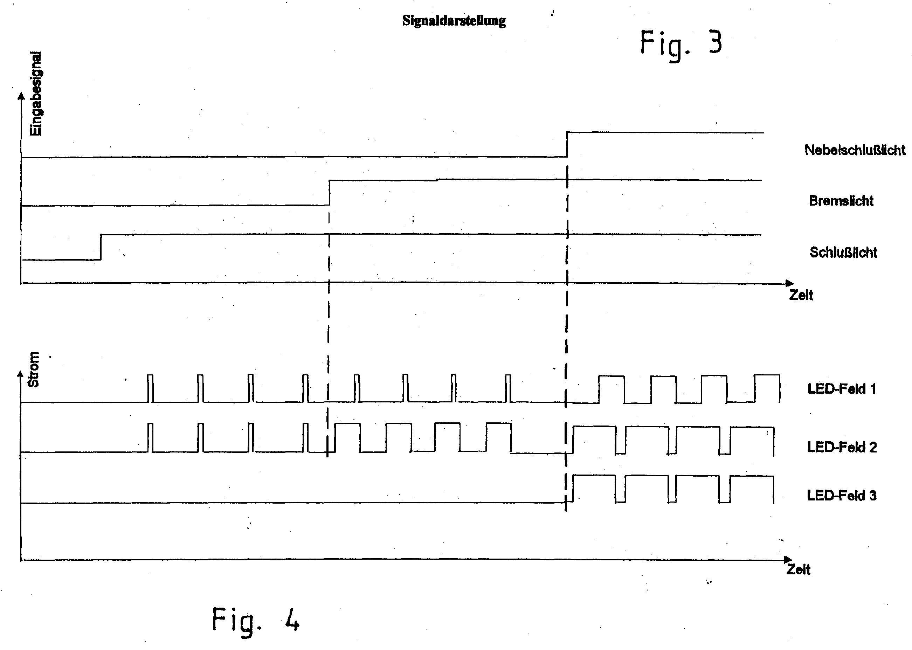

Fig. 3 zeigt die Abhängigkeit der Eingabesignale von der Zeit für das Nebelschlußlicht NSL, das Bremslicht BR und das Schlußlicht SL. Es ist ersichtlich, daß für das Schlußlicht SL das kleinste Eingabesignal vorgesehen ist. Für das Bremslicht BR und das Nebelschlußlicht NSL sind höhere Eingabesignale vorgesehen, wobei das Eingabesignal für das Nebelschlußlicht NSL höher ist als für das Bremslicht BR. In Fig. 3 ist der Fall dargestellt, daß zunächst das Schlußlicht eingeschaltet wird. Anschließend wird das Bremspedal betätigt, wodurch das Bremslicht aufleuchtet. Schließlich wird auch das Nebelschlußlicht NSL eingeschaltet. Sobald die entsprechenden Funktionen eingeschaltet werden, wird das zugehörige Eingabesignal entsprechend erhöht.

Fig. 4 zeigt beispielhaft für die drei Signalfelder 1 bis 3 die entsprechenden getakteten Ströme sowie die zur Einstellung der erforderlichen Helligkeit vorgesehenen pulsweitenmodulierten Signale. Wie sich aus Fig. 1 ergibt, ist dem Signalfeld 1 das Schlußlicht SL, dem Signalfeld 2 das Bremslicht BR und dem Signalfeld 3 das Nebelschlußlicht NSL zugeordnet. Wird lediglich das Schlußlicht SL eingeschaltet, dann kann die Helligkeit der entsprechenden LEDs verhältnismäßig gering sein. Wie anhand von Fig. 5 dargelegt worden ist, werden in diesem Falle sämtliche Signalfelder mit der gleichen niedrigen Helligkeit betätigt. Sobald das Bremspedal betätigt und dementsprechend das Bremslicht BR eingeschaltet wird, wird durch entsprechende Änderung des pulsweitenmodulierten Signals erreicht, daß die der Bremslichtfunktion zugeordneten Signalfelder entsprechend hell leuchten.

In dem Augenblick, in dem auch das Nebelschlußlicht NSL zugeschaltet wird, also das Schlußlicht, das Nebelschlußlicht und das Bremslicht gleichzeitig leuchten, wird das Pulspausenverhältnis der dem Schlußlicht SL und dem Bremslicht BR zugeordneten LEDs erhöht. Im dargestellten Ausführungsbeispiel hat das dem Nebelschlußlicht NSL zugeordnete Signalfeld 3 das gleiche Pulspausenverhältnis wie das dem Bremslicht BR zugeordnete Signalfeld 2. Das Signalfeld 1, das dem Schlußlicht SL zugeordnet ist, hat ein kleineres Pulspausenverhältnis als die Signalfelder 2 und 3.

Das im Mikroprozessor 4 abgelegte Programm kann in Abhängigkeit von der jeweils erforderlichen Signalfunktion der Heckleuchte die entsprechenden Pulspausenverhältnisse bzw. die pulsweitenmodulierten Signale für die einzelnen Signalfelder erzeugen.

Über die Anschlüsse 6 bis 8 erhält der Mikroprozessor 4 die entsprechenden Signale, wenn das Schlußlicht SL und das Nebelschlußlicht NSL eingeschaltet sowie das Bremspedal betätigt werden. An den Ausgängen 12 bis 14 liegen dann die durch den Mikroprozessor 4 verarbeiteten Ausgangssignale an, mit denen die entsprechenden Signalfelder 1 bis 3, 30 angesteuert werden.

Die vom Gesetzgeber an Heckleuchten von Kraftfahrzeugen gestellten Anforderungen bezüglich der Lichtstärke, der Flächendimension und des Abstandes der einzelnen Funktionsbereiche werden einwandfrei erfüllt. Je nach geforderter Signalkombination entstehen unterschiedliche Ausleuchtvarianten, wie anhand von Fig. 5 erläutert worden ist. Die Signalfelder 1 bis 3, 30 können mit mehreren Signalfunktionen belegt werden. Wie anhand von Fig. 5 beispielhaft dargelegt worden ist, wird das Signalfeld 1 als Schlußlicht SL und als Bremslicht BR eingesetzt. Gleiches gilt auch für die Signalfelder 2 und 3. Dem Signalfeld 30 kommen je nach Signalkombination die Funktion eines Schlußlichtes SL, eines Bremslichtes BR und eines Nebelschlußlichtes NSL zu. Dabei werden die Signalfelder, abhängig von der jeweiligen Signalkombination, mit unterschiedlichen Helligkeitsstufen angesteuert. Die räumliche Aufteilung der einzelnen Lichtsignalfunktionen ist variabel in Abhängigkeit von der jeweiligen Signalkombination. Dadurch ist eine hohe Designfreiheit gegeben, ohne daß dies sich nachteilig auf die Erfüllung der gesetzlichen Anforderungen auswirkt. So kann bei dem in Fig. 5 dargestellten Ausführungsbeispiel der Abstand zwischen dem Bremslicht BR und dem Nebelschlußlicht NSL ohne weiteres 100 mm betragen, wie es der Gesetzgeber vorschreibt. Um niedere Helligkeitsstufen zu erzeugen, werden die LEDs der Signalfelder 1 bis 3, 30 nur gering bestromt, etwa 20 % vom Nennstrom und kleiner, In diesem Strombereich weisen die LEDs in der Regel Stärketoleranzen in der Vorwärtsspannung auf, wodurch die LEDs in diesem Bereich unterschiedlich hell leuchten, so daß das jeweilige Funktionsfeld ungleich ausgeleuchtet würde. Da die LEDs jedoch mit Nennstrom getaktet und die Helligkeit durch das Pulspausenverhältnis gesteuert wird, macht sich diese Eigenheit der LEDs bei geringer Bestromung nicht nachteilig bemerkbar.

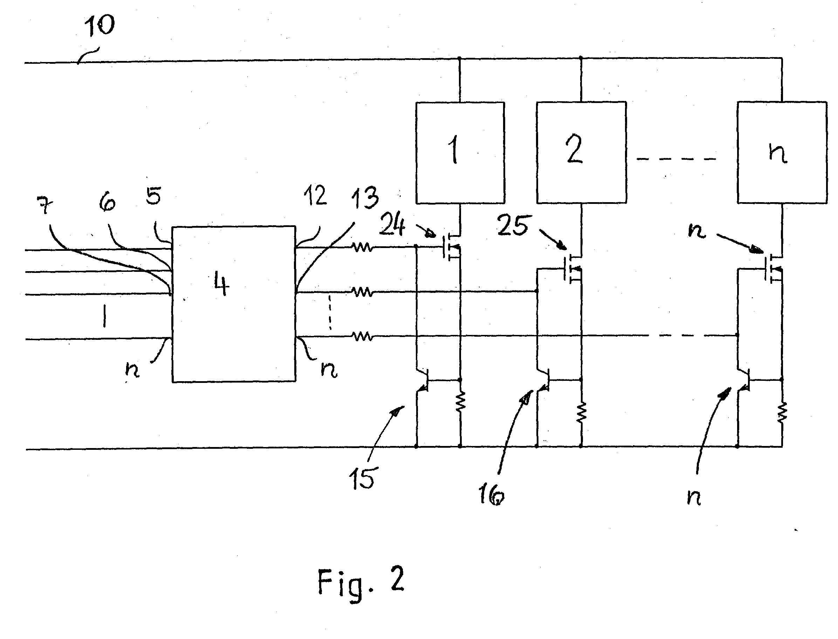

Selbstverständlich kann auch das Rückfahrlicht der Heckleuchte als Funktionsbereich in die Vorrichtung eingebaut werden. Wie Fig. 2 zeigt, kann die Zahl die Signalfelder von 1 bis n reichen, je nach Anzahl der gewünschten Signalfunktionen. Der Mikroprozessor 4 weist in diesem Fall eine entsprechende Zahl von Eingängen 5 bis n und Ausgängen 12 bis n auf. Die Batteriespannung 10 beträgt üblicherweise 12 Volt und wird durch den Spannungsregler 9 (Fig. 1) auf das zum Betrieb des Mikroprozessors 4 notwendige Maß verringert. Den Signalfeldern 1 bis n sind die Strombegrenzerstufen 15 bis n und Treiberstufen 24 bis n zugeordnet.

In Abhängigkeit von den analogen Eingangssignalen, die an den Eingängen 5 bis n des Mikroprozessors 4 anliegen, wird die Helligkeit der anzusteuernden Signalfelder 1 bis n gesteuert, wie es beispielhaft anhand von Fig. 5 dargestellt worden ist.

Anstelle der LEDs kann jedes Signalfeld auch durch wenigstens eine Glühlampe gebildet sein, die in gleicher Weise wie die LEDs angesteuert wird. Es ist hierbei möglich, jedem Signalfeld auch mehrere Glühlampen zuzuordnen.

Die beschriebenen Signalfelder 1 bis 3, 30 müssen in der Heckleuchte nicht räumlich voneinander getrennte Bereiche sein. So können die diesen Signalfeldern zugeordneten LEDs auf einer gemeinsamen Platine sitzen, wobei die für die jeweilige Signalfunktion notwendigen LEDs in der beschriebenen Weise angesteuert werden. Die Heckleuchte hat in bekannter Weise die Lichtscheibe, die entsprechend den geforderten Funktionsbereichen eingefärbt ist. Die LEDs auf der Platine sind hinter der Lichtscheibe so angeordnet, daß im Betrieb des Fahrzeuges die entsprechenden Lichtscheibenbereiche aufleuchten.

## Patentansprüche

1. Verfahren zur Ansteuerung von Leuchtmitteln von Fahrzeugen, vorzugsweise von Kraftfahrzeugen, bei dem die Leuchtmittel verschiedenen Funktionsbereichen zugeordnet sind und bestromt werden,
dadurch gekennzeichnet, daß die Leuchtmittel mit Nennstrom getaktet und ihre Helligkeit durch ein pulsweitenmoduliertes Signal eingestellt wird.

2. Verfahren nach Anspruch 1,
dadurch gekennzeichnet, daß die Leuchtmittel in Abhängigkeit von ihrer Signalfunktion so angesteuert werden, daß sie unterschiedlich hell strahlen.

3. Verfahren nach Anspruch 1 oder 2,
dadurch gekennzeichnet, daß der Strom im Pfad zu den Leuchtmitteln begrenzt wird.

4. Verfahren nach Anspruch 3,
dadurch gekennzeichnet, daß der Strom auf einen konstanten Wert eingestellt wird.

5. Vorrichtung zur Durchführung des Verfahrens nach einem der Ansprüche 1 bis 4, mit wenigstens zwei Funktionsbereichen zugeordneten Leuchtmitteln, die an eine Stromquelle angeschlossen und durch Betätigungselemente einschaltbar sind,
dadurch gekennzeichnet, daß die Betätigungselemente an wenigstens einen Mikroprozessor (4) angeschlossen sind, der die Signale der Betätigungselemente in pulsweitenmodulierte Signale wandelt, die an Ausgängen (12 ... n) des Mikroprozessors anliegen und über Treiberstufen (24 ... n) den Leuchtmitteln zuführbar sind.

6. Vorrichtung nach Anspruch 5,
dadurch gekennzeichnet, daß an den Mikroprozessor (4) ein Spannungsregler (9) angeschlossen ist.

7. Vorrichtung nach Anspruch 5 oder 6,
dadurch gekennzeichnet, daß die Treiberstufen (24 ... n) jeweils einen elektronischen Schalter, vorzugsweise ein MOSFET, aufweisen.

8. Vorrichtung nach einem der Ansprüche 5 bis 7,
dadurch gekennzeichnet, daß jeder Treiberstufe (24 ... n) eine Strombegrenzerstufe (15 ... n) zugeordnet ist.

9. Vorrichtung nach Anspruch 8,
dadurch gekennzeichnet, daß die Strombegrenzerstufen (15 ... n) jeweils einen Transistor (18 bis 20) und einen parallel liegenden Widerstand (21 bis 23) aufweisen.

10. Vorrichtung nach einem der Ansprüche 5 bis 9,
dadurch gekennzeichnet, daß die Leuchtmittel zu Signalfeldern (1 bis 3, 30) zusammengefaßt sind.

11. Vorrichtung nach Anspruch 10,
dadurch gekennzeichnet, daß jedem Signalfeld (1 bis 3, 30) eine Treiberstufe (24 ... n) und eine Strombegrenzerstufe (15 ... n) zugeordnet ist.

12. Vorrichtung nach einem der Ansprüche 5 bis 11,
dadurch gekennzeichnet, daß die Leuchtmittel LEDs sind.

13. Vorrichtung nach einem der Ansprüche 5 bis 11,
dadurch gekennzeichnet, daß die Leuchtmittel Glühlampen sind.

14. Vorrichtung nach einem der Ansprüche 5 bis 13,
dadurch gekennzeichnet, daß die Vorrichtung eine Heckleuchte des Kraftfahrzeuges ist.
